Europäisches Patentamt

European Patent Office

Office européen des brevets

(11) Veröffentlichungsnummer: **0 268 756 B1**

## (12) EUROPÄISCHE PATENTSCHRIFT

(45) Veröffentlichungstag der Patentschrift: **23.12.92**

(51) Int. Cl.⁵: **C01B 33/04**

(21) Anmeldenummer: **87112456.6**

(22) Anmeldetag: **27.08.87**

(54) Verfahren zur Herstellung von Disilan aus Monosilan.

(30) Priorität: **15.11.86 DE 3639202**

(43) Veröffentlichungstag der Anmeldung:
**01.06.88 Patentblatt 88/22**

(45) Bekanntmachung des Hinweises auf die
Patenterteilung:
**23.12.92 Patentblatt 92/52**

(84) Benannte Vertragsstaaten:
**BE DE FR GB NL**

(56) Entgegenhaltungen:
**EP-A- 0 143 701**
**US-A- 4 568 437**

**PATENT ABSTRACTS OF JAPAN, band 8, nr. 24 (c-208)(1461), 2. Februar 1984, & JP-A-58 190811 (FUJITSU K.K.) 07.11.1983**

**PATENT ABSTRACTS OF JAPAN, Band 9, nr. 283 (C-313)(2006), 9. November 1985, & JP-A-60 127214 HONJIYOU CHEMICAL K.K.) 06.07.1985**

(73) Patentinhaber: **Degussa Aktiengesellschaft**
**Weissfrauenstrasse 9**
**W-6000 Frankturt am Main 1(DE)**

(72) Erfinder: **Sundermeyer, Wolfgang, Prof.**
**Schnellbachstrasse 49**
**W-6903 Neckargemünd(DE)**
Erfinder: **Müller, Michael, Dr.**
**Neurott 56**
**W-6831 Plankstadt(DE)**
Erfinder: **Klockner, Hans Jürgen, Dr.**
**Grünaustrasse 19**
**W-6450 Hanau 9(DE)**

**Beschreibung**

Die Erfindung betrifft die Herstellung von Disilan aus Monosilan mittels Plasmaentladung

Ein Plasma stellt ein teilweise oder ganz ionisiertes Gas dar, in dem positive, negative und neutrale Moleküle in einer über alles gesehen neutralen Umgebung nebeneinander existieren.

Daß elektrische Entladungen, mit denen man Nichtgleichgewichtsplasmen erzeugt, für die Darstellung von höheren Silanen aus Monosilan geeignet sind, demonstrierten erstmals E.J.Spanier und A.G. Mac Diarmid (Inorg.Chem.1 (1962)432/3)

Der von ihnen verwendete Ozonisator lieferte mit einer Ausbeute von 63 % eine Mischung aus 66% $Si_2H_6$, 23% $Si_3H_8$ und 11% höhere Silane, während sich die restlichen 37% in Form einer amorphen Schicht auf den Innenwänden des Ozonisators niederschlagen. Mit Hilfe der stillen elektrischen Entladung bei Atmosphärendruck beziehungsweise Überdruck aus Monosilan Disilan zu erzeugen, ist ebenfalls Gegenstand der JP-OS 60/127 214 (C.A. 1986 , 104:7722 m).

RF-Entladungen (Hochfrequenzglimmentladungen) sind nach Dickson (US-PS 4 568 437) geeignet, Disilan mit einer Ausbeute von ~40% bezogen auf das umgesetzte Monosilan zu erzeugen.

Nach diesem Verfahren arbeitet man bei 1 bis 2 Torr und einer Temperatur von 120 bis 300°C.

Aber auch hier ist die Bildung einer unerwünschten amorphen Siliciumschicht an den Wänden des Reaktionsgefäßes nicht zu umgehen, was eigene Versuche bestätigen.

Die EP-A1 0 143 701 betrifft die Abscheidung von amorphen Siliciumschichten durch thermische Zersetzung von Disilan.

Gemäß den dort beschriebenen Verfahren erhält man diese Verbindung durch Umsetzung von Monosilan mit atomarem Wasserstoff, den man außerhalb der Reaktionszone durch Mikrowellenentladung in einer Wasserstoffgasatmosphäre erzeugt.

Genauere Verfahrensparameter wie zum Beispiel eingestrahlte Leistung und Wasserstoffkonzentration beziehungsweise eine Disilanausbeute werden jedoch nicht beschrieben.

Aufgabe der Erfindung ist ein Verfahren zur Herstellung von Disilan($Si_2H_6$)aus Monosilan ($SiH_4$), das mit hoher Selektivität abläuft und bei dem die Bildung einer amorphen Siliciumschicht weitestgehend vermieden wird.

Es wurde gefunden, daß man diese Ziele erreicht, wenn man ein Gemisch aus Wasserstoff und Monosilan der Plasmaentladung aussetzt, wobei

man ein Gemisch, bestehend aus 70 bis 98 Vol%, insbesondere 90 bis 95 Vol% Wasserstoff und 2 bis 30 Vol%, insbesondere 5 bis 10 Vol% Monosilan verwendet.

Die beiden Gase werden insbesondere vor der Reaktionszone miteinander vermischt, die praktisch mit der Entladungszone identisch ist.

Bei Frequenzen oberhalb von 0,5 MHz ist ein direkter Kontakt zwischen Elektroden und Plasma nicht mehr erforderlich, und die Energie kann durch außerhalb des Reaktionsgefäßes liegende Elektroden übertragen werden.

Die Elektroden bilden dabei einen Kondensator mit dem Plasma als Dielektrikum (kapazitive Einkopplung).

Liegt das Reaktionsgefäß in der Achse eines Schwingkreises, zum Beispiel einer Kupferspule, kann man die Energie auch induktiv auf das Plasma übertragen.

Bevorzugt verwendet werden Frequenzen von 0,5 bis 150 MHz, insbesondere von 5 bis 50 MHz.

Die eingestrahlte Leistung liegt zwischen 0,01 und 1 Watt/$cm^3$, insbesondere zwischen 0,05 und 0,4 W/$cm^3$ und damit erheblich unter der gemäß US-PS 4 568 437 notwendigen optimalen Leistung.

(Die Volumenangabe bezieht sich auf die Reaktionszone). Hochfrequenzglimmentladungen, wie sie erfindungsgemäß genutzt werden, setzen einen Unterdruck in der Entladungszone voraus.

Es hat such als vorteilhaft erwiesen, bei der Umwandlung von Monosilan in Disilan in einem Druckbereich von $1 \cdot 10^2$ bis $5 \cdot 10^3$ Pa, bevorzugt von $1 \cdot 10^2$ bis $3 \cdot 10^3$ Pa zu arbeiten.

Die Verweilzeit des gasförmigen Gemisches in der Entladungszone liegt unterhalb von 30 sec, bevorzugt zwischen 0,01 und 25 sec, bevorzugt 1 und 25 sec, bezogen auf das Gemisch im Normalzustand.

Entsprechend der als optimal angesehenen Verweilzeitbereiche sind die Durchsätze (Nl/h) des Reaktionsgemisches einzustellen.

Das Reaktionsrohr wird bis auf 300°C aufgeheizt, insbesondere auf 40 bis 200°C. In einer bevorzugten Ausführungsform verzichtet man jedoch auf eine spezielle Beheizung und läßt die Umsetzung bei der Temperatur ablaufen, die sich während des Entladungsvorgangs in der Reaktionszone einstellt, das heißt etwa 40 bis 60°C.

Es zeigt sich, daß mit ansteigender eingestrahlter Leistung die Disilanmenge bis zu einem Grenzwert

2

wächst. Nach dem Durchlaufen des Maximums fällt die Menge des erzeugten Disilans wieder ab.

Erwartungsgemäß steigt die Disilanmenge im Produktgas mit der Durchsatzdrosselung bei konstanter Leistung und konstantem Druck.

Dabei gilt, daß man mit abnehmendem Druck in der Reaktionszone bei konstantem Durchsatz eine zunehmende Menge an Disilan erhält, auch wenn diese Abhängigkeit nicht sehr stark ausgeprägt ist.

Bessere Ausbeuten im oberen Teil des beanspruchten Druckbereichs erzielt man mit dem sogenannten "gepulsten" Betrieb der RF-Anlage. Diese Fahrweise ermöglicht zusätzlich auch einen höheren Massenfluß.

Unter diesen Betriebsbedingungen wird das Plasma nur für kurze Zeit gezündet.

Man unterbricht nach einer in weiten Grenzen wählbaren Zeit, beispielsweise von 1 bis 100 msec, die Energiezufuhr und zündet das Plasma anschließend wieder, beispielsweise nach 1 bis 40 msec.

Ein zwischengeschaltetes Wattmeter zeigt die Durchschnittsleistung über die Zeit gemittelt an.

Werden zum Beispiel 45 W für einen Zeitraum von 3,3 msec eingestrahlt und anschließend für 33 msec der RF-Generator abgeschaltet, entspricht das einer mittleren Leistung von ca. 4 W.

Die bevorzugt eingestrahlte mittlere Leistung liegt im gepulsten Betrieb zwischen 0,01 und 1 $W/cm^3$, insbesondere 0,05 und 0,4 $W/cm^3$, wobei die kurzfristig eingestrahlte Leistung zwischen 0,5 und 4 $W/cm^3$ liegt.

Es ist sinnvoll, nach der Umsetzung Disilan und eventuell erzeugtes Trisilan durch Ausfrieren aus dem Reaktionsgemisch zu entfernen und Monosilan über einen Gasdurchflußregler entsprechend der eingesetzten Menge nachzudosieren, um so im kontinuierlichen Betrieb höhere Umsätze zu erzielen.

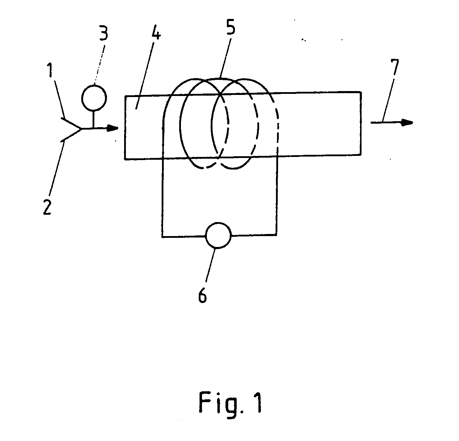

Abb. 1 zeigt das Fließschema bei diskontinuierlicher Fahrweise.

Über die Leitungen (1) und (2) werden Wasserstoff beziehungsweise Monosilan eingelassen, wobei die Flußkonstanz mit Hilfe von Gasdurchflußregler überwacht wird.

Unter ständiger Druckkontrolle (3) strömt das Gemisch in das Reaktionsrohr (4), das aus Glas oder Quarz gefertigt ist. Eine mit dem Plasmagenerator (6) verbundene, als Schwingkreis wirkende Spule (5) umschließt das Reaktionsrohr, aus dem die Produktmischung (7) ausströmt, deren Zusammensetzung in einem Teilstrom gaschromatisch ermittelt wird.

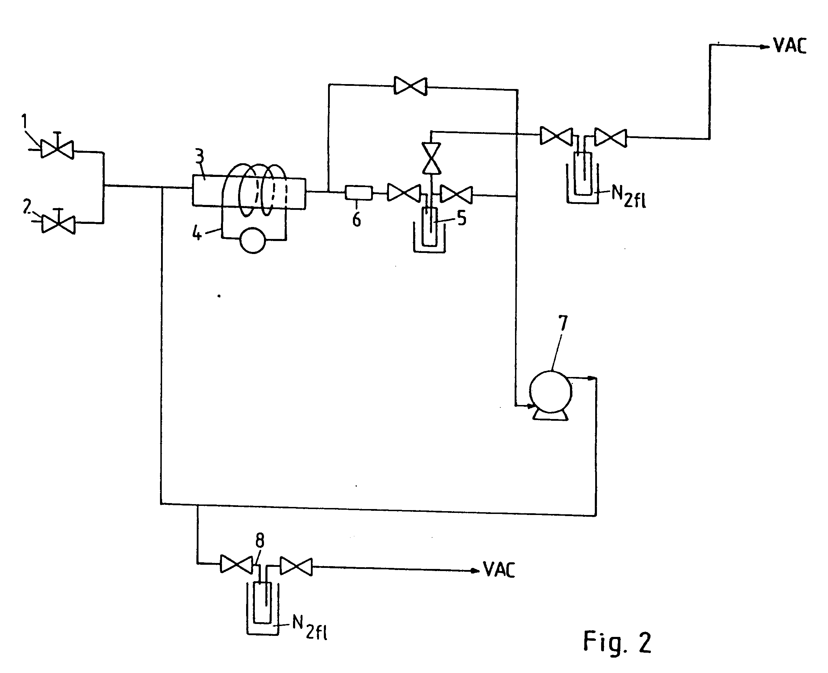

Die Abb. 2 zeigt das Fließschema für die cyclisch (kontinuierlich) betriebene Apparatur. Über die Durchflußregler (1) und (2) werden Wasserstoff beziehungsweise Monosilan eingeleitet Unter ständiger Druckregulierung durch eine Unterdruckleitung (VAC) strömt das Gemisch in das Reaktionsrohr (3), das aus Glas oder Quarz gefertigt ist. Eine mit dem Plasmagenerator verbundene, als Schwingkreis wirkende Spule (4) umschließt das Reaktionsrohr, aus dem die Produktmischung durch ein Filter (6) in eine mit Isopentan und flüssigem Stickstoff gekühlte Kühlfalle (5) eingeleitet wird. Disilan und höhere Silane werden hier ausgefroren, während das nicht umgesetzte Silan die Kühlfalle durchläuft und über eine Membrampumpe (7) im Kreis geführt wird. Nicht eingezeichnet ist der Seitenstrom, in dem gaschromatographisch ständig der Umsatz ermittelt wird. Über (8) wird der überschüssige Wasserstoff ausgeschleust.

Beispiele

| Versuch Nr. | | 1 | 2 | 3 |
|---|---|---|---|---|
| Leistung des RF-Generators | a) (W/cm$^3$) | 0,21 | 0,23 | mittlere Leistung 0,11 W/cm$^3$ Spitzenleistung 1,2 W/cm$^3$ |
| | b) (W) | 15 | 16 | mittlere Leistung 4 W Spitzenleistung 45W |
| SiH$_4$ (N l /h) | | 0,6 | 3,8 | Pulsdauer 3,3 msec |
| H$_2$ (N l /h) | | 11,8 | 11,8 | Pulspause 33,0 msec |
| Mischungsverhältnis, % SiH$_4$ in H$_2$ | | 5 | 15,2 | 10 |
| Druck (Pa 10$^2$) | | 2,7 | 1,6 | 12,5 |
| Verweilzeit (sec) | | 0,05 | 0,03 | 2 |
| Ausbeute(umsatzbezogen) | | | | |
| Si$_2$H$_6$ | | 85,0 | 86,6 | 77,5 |
| Si$_3$H$_8$ | | 15,0 | 10,0 | 11,2 |
| Verlust | | 0 | 3,4 | 11,3 |

Die Versuche 1) und 2) wurden in der oben beschriebenen Apparatur (Abb 1) durchgeführt. Die Reaktionszone heizte sich während des Entladungsvorgangs auf etwa 40 - 60°C auf. Ein Verlust in Form einer Feststoffabscheidung auf der Innenwand des Reaktionsrohres (Ø 3 cm) wurde in geringem Umfang nur bei Versuch 2 festgestellt.

Versuch 3 wurde in der Apparatur gemäß Abb. 2 durchgeführt. Das umgesetzte Silan wurde nachdosiert, so daß ständig eine Mischung mit einem Anteil von 10 Vol.% SiH$_4$ in die Reaktionszone einströmte. Die Versuchsdauer betrug 4h. Der Umsatz belief sich auf 53,8 %, bezogen auf das eingesetzte Silan.

## Patentansprüche

1. Verfahren zur Herstellung von Disilan aus Monosilan mittels Plasmaentladung,
   dadurch gekennzeichnet, daß man ein Gemisch bestehend aus 70 bis 98 Vol% Wasserstoff und 2 bis 30 Vol% Monosilan durch die Entladungszone leitet.

2. Verfahren gemäß Anspruch 1,
   dadurch gekennzeichnet, daß man in die Entladungszone eine Leistung von 0,01 bis 1 Watt/cm$^3$ einstrahlt.

3. Verfahren gemäß Anspruch 1,
   dadurch gekennzeichnet, daß man die Leistung von 0,5 bis 4 Watt/cm$^3$ gepulst einstrahlt, so daß eine mittlere Leistung von 0,01 bis 1 Watt/cm$^3$ resultiert.

4. Verfahren gemäß den Ansprüchen 1 bis 3,
   dadurch gekennzeichnet, daß in der Entladungszone ein Druck von 1.10$^2$ bis 5.10$^3$ Pa herrscht.

5. Verfahren gemäß den Ansprüchen 1 bis 4,
   dadurch gekennzeichnet, daß die Verweilzeit des Gemisches in der Entladungszone zwischen 0,01 und 25 sec liegt.

6. Verfahren gemäß einem der Ansprüche 1 bis 5,
   dadurch gekennzeichnet, daß man die Reaktionsprodukte ausfriert, das resultierende Gemisch auf die Ausgangskonzentrationen von Monosilan beziehungsweise Wasserstoff einstellt und wieder durch die Entladungszone leitet.

**Claims**

1. A process for the production of disilane from monosilane by plasma discharge, characterized in that a mixture consisting of 70 to 98% by volume hydrogen and 2 to 30% by volume monosilane is passed through the discharge zone.

2. A process as claimed in claim 1, characterized in that energy of 0.01 to 1 watt/cm$^3$ is beamed into the discharge zone.

3. A process as claimed in claim 1, characterized in that the energy of 0.5 to 4 watt/cm$^3$ beamed in is pulsed so that an average energy of 0.01 to 1 watt/cm$^3$ is obtained.

4. A process as claimed in claims 1 to 3, characterized in that a pressure of $1.10^2$ to $5.10^3$ Pa prevails in the discharge zone.

5. A process as claimed in claims 1 to 4, characterized in that the residence time of the mixture in the discharge zone is between 0.01 and 25 seconds.

6. A process as claimed in any of claims 1 to 5, characterized in that the reaction products are frozen out, the resulting mixture is adjusted to the starting concentrations of monosilane and hydrogen and is again passed through the discharge zone.

**Revendications**

1. Procédé d'obtention du disilane à partir du monosilane à l'aide de décharge de plasma, caractérisé en ce que l'on conduit un mélange composé de 70 à 98 % en vol d'hydrogène et de 2 à 30 % en vol de monosilane à travers la zone de décharge.

2. Procédé selon la revendication 1, caractérisé en ce que l'on irradie dans la zone de décharge une puissance de 0,01 à 1 Watt/cm$^3$.

3. Procédé selon la revendication 1, caractérisé en ce que l'on irradie la puissance de 0,5 à 4 Watt/cm$^3$ d'une manière pulsée, de façon qu'une puissance moyenne de 0,01 à 1 Watt/cm$^3$ en résulte.

4. Procédé selon les revendications 1 à 3 caractérisé en ce que dans la zone de décharge une pression de $1.10^2$ à $5.10^3$ Pa règne.

5. Procédé selon les revendications 1 à 4 caractérisé en ce que le temps de séjour du mélange dans la zone de décharge se situe entre 0,01 et 25 sec.

6. Procédé selon l'une des revendications 1 à 5, caractérisé en ce que l'on sépare par congélation les produits réactionnels, que l'on ajuste le mélange en résultant à la concentration de départ du monosilane ou de l'hydrogène et que l'on continue à acheminer à travers la zone de décharge.

Fig. 1

Fig. 2

VAC

N$_{2fl}$

VAC

N$_{2fl}$

EP 0 268 756 B1